# EUROPEAN PATENT APPLICATION

(11) **EP 4 769 643 A1**
(43) Date of publication of application: **01.07.2026**
(21) Application number: 25218270.4
(22) Date of filing: 25.11.2025
(51) Int. Cl.: H01M 10/48, H01M 50/507, H01M 50/516, H01M 50/519

(54) **BATTERY PACK**

(30) Priority: 31.12.2024 CN 202423299172 U
(71) Applicant: ZHEJIANG COSMX POWER CO., LTD., Jiaxing Zhejiang 314300 (CN)
(72) Inventor: DILIMURETIJIANG, Keremu, Jiaxing, 314300 (CN); HUANG, Zhaoqi, Jiaxing, 314300 (CN); HUA, Kun, Jiaxing, 314300 (CN); ZHAO, Wenbin, Jiaxing, 314300 (CN); WANG, Liming, Jiaxing, 314300 (CN); MIN, Guangshuai, Jiaxing, 314300 (CN)
(74) Representative: Murgitroyd & Company

(57) **Abstract**

A battery pack includes a housing, a busbar bracket, a BMS board and a plurality of cells which are located within the housing. The busbar bracket includes a plate body and an aluminium busbar. The plate body and the aluminium busbar are injection-moulded integrally. The aluminium busbar and the plate body are injection-moulded integrally and the aluminium busbar serves as an electrically conductive busbar. In this way, during the process of injection-moulding the aluminium busbar and the plate body into the busbar bracket, since the heat dissipation rate of aluminium is lower than that of copper and is close to that of an injection-moulded material, cooling rates of the aluminium busbar and the plate body become consistent during cooling of the injection-moulded busbar bracket, thereby reducing the probability of forming a gap between the plate body and the aluminium busbar and lowering the risk of fracture of the support.

## Description

### TECHNICAL FIELD

The present invention relates to the technical field of batteries, and in particular to a battery pack.

### BACKGROUND

With the rapid development of battery technology, there is a growing need for the use of battery packs. The battery pack is provided with a plurality of cells, tabs of the cells are connected to a BMS board via a busbar bracket, and the busbar bracket provides support for the series connection between tabs of adjacent cells. The busbar bracket is provided with an electrically conductive busbar for detecting the voltage of the cells. The electrically conductive busbar is mostly a copper busbar, and during an injection moulding process of the busbar bracket, it is likely to form a gap between an injection-moulded plate body and the copper busbar, which may even lead to fracture of the injection-moulded plate body.

### SUMMARY

In view of this, the present invention provides a battery pack to address the issue of a gap being formed between an injection-moulded plate body and an electrically conductive busbar during an injection moulding process of a busbar bracket, which may even lead to fracture of the injection-moulded plate body.

Embodiments of the present invention provides a battery pack includes a housing, and a busbar bracket, a BMS board and a plurality of cells which are located within the housing, where the busbar bracket is disposed between the plurality of the cells and the BMS board, and the busbar bracket includes:
a plate body having a surface provided with a through hole, tabs of the cells extending through the through hole to a side of the plate body facing away from the cells; and
an aluminium busbar located on the side of the plate body facing away from the cells, the aluminium busbar including a first sub-plate and a second sub-plate disposed at an angle, the first sub-plate being electrically connected to the BMS board, and the second sub-plate being electrically connected to the tabs,
where the plate body and the aluminium busbar are injection-moulded integrally.

Optionally, at least some of the plurality of cells are connected in series, a first tab of one of every two adjacent cells of the cells connected in series and a second tab of the other one of the two adjacent cells are both connected in an overlapping manner to the second sub-plate, and the first tab has an opposite polarity to the second tab, where
the second tab is located between the first tab and the second sub-plate, the first tab has a greater length than the second tab in a length direction of the second sub-plate, and the first tab includes a first connection portion welded to the second tab, a second connection portion welded to the second sub-plate, and a bend portion located between the first connection portion and the second connection portion.

Optionally,
the bend portion has a radius of r, where 0.2 mm ≤ r ≤ 2 mm; and/or
the bend portion has an angle of α, where 10° ≤ α *≤* 50°; and/or
two ends of the bend portion have a height difference of h, where 0.1 mm ≤ h ≤ 0.9 mm.

Optionally, a first weld bead is formed between the second connection portion and the second sub-plate, and a second weld bead is formed between the first tab and the second tab;
a distance between the first weld bead and the second weld bead is defined as L1, where 3 mm ≤ L1 ≤ 15 mm; and/or
a distance between the first weld bead and the bend portion is defined as L2, where 1 mm ≤ L2 ≤ 5 mm; and/or
a distance between the second weld bead and the bend portion is defined as L3, where 1 mm ≤ L3 ≤ 5 mm.

Optionally, the first tab and the second tab are connected via the second weld bead, an area of the second weld bead is defined as S, and a current carrying capacity of the battery pack is defined as I, where S and I satisfies 2 ≤ I/S ≤ 7.

Optionally, the first tab is a positive tab and the second tab is a negative tab.

Optionally, a thickness of the positive tab is 1.1 to 1.8 times of a thickness of the negative tab.

Optionally, the second tab has a notch, and a length ratio of the notch to the second tab is 0.2 to 0.45 in a length direction of the second tab.

Optionally, the battery pack includes a heat-conducting block disposed between a thermistor of the BMS board and the tab, the heat-conducting block being disposed on the first connection portion.

Optionally, at least two heat-conducting blocks are provided, every two adjacent cells of the cells connected in series form a cell group, each of the cell groups is provided with one of the heat-conducting blocks, and no heat-conducting block is provided between adjacent cell groups.

Optionally, the first sub-plate has a thickness of m, where 0.5 mm ≤ m ≤ 3 mm; and/or the second sub-plate has a width of n, where 5 mm ≤ n ≤ 15 mm.

Optionally, the BMS board is provided with a mounting hole, a copper plating layer is disposed on an inner wall surface of the mounting hole, and the first sub-plate extends into the mounting hole and is electrically connected to the copper plating layer.

In the busbar bracket according to the present invention, the aluminium busbar and the plate body are injection-moulded integrally and the aluminium busbar serves as an electrically conductive busbar. In this way, during the process of injection-moulding the aluminium busbar and the plate body into the busbar bracket, since the heat dissipation rate of aluminium is lower than that of copper and is close to that of an injection-moulded material, cooling rates of the aluminium busbar and the plate body become consistent during cooling of the injection-moulded busbar bracket, thereby reducing the probability of forming a gap between the plate body and the aluminium busbar and lowering the risk of fracture of the support.

In addition, the aluminium busbar includes the first sub-plate and the second sub-plate, the first sub-plate is configured to be connected to the BMS board, the second sub-plate is configured to be connected to the tabs of the cells, and the first sub-plate and the second sub-plate are disposed at an angle. That is, the aluminium busbar is configured as an integral L-shaped structure, enabling the BMS board to conveniently detect the voltage of the cells via the aluminium busbar while achieving a more compact layout of the busbar bracket.

### BRIEF DESCRIPTION OF THE DRAWINGS

To describe the technical solutions in embodiments of the present invention or in the prior art more clearly, the following briefly describes the accompanying drawings required for describing the embodiments or the prior art. It is clear that the accompanying drawings in the following descriptions are merely some embodiments of the present invention, and those of ordinary skill in the art may still derive other drawings from the provided accompanying drawings without creative efforts.
FIG. 1 is a schematic structural diagram of cells and a busbar bracket according to an embodiment.
FIG. 2 is a top view of FIG. 1.
FIG. 3 is a sectional view along a line A-A in FIG. 2.
FIG. 4 is an enlarged view of an area C in FIG. 3.
FIG. 5 is a schematic structural diagram of tabs and an aluminium busbar before welding.
FIG. 6 is a schematic structural diagram of the tabs and the aluminium busbar after welding.
FIG. 7 is a schematic structural diagram of cells, a busbar bracket and a BMS board.
FIG. 8 is a top view of FIG. 7.
FIG. 9 is a sectional view along a line B-B in FIG. 8. and
FIG. 10 is an enlarged view of an area D in FIG. 5.

### Reference numerals:

1 - busbar bracket; 2 - BMS board; 3 - cell; 4 - first weld bead; 5 - second weld bead; 6 - heat-conducting block; 11 - plate body; 111 - through hole; 12 - aluminium busbar; 121 - first sub-plate; 122 - second sub-plate; 21 - mounting hole; 31 - first tab; 311 - first connection portion; 312 - second connection portion; 313 - bend portion; 32 - second tab
.

### DETAILED DESCRIPTION OF THE EMBODIMENTS

The technical solutions in the embodiments of the present invention will be clearly and completely described below with reference to the drawings in the embodiments of the present invention. Apparently, the embodiments described are merely some rather than all of the embodiments of the present invention. All other embodiments obtained by those of ordinary skill in the art based on the embodiments of the present invention without creative efforts shall fall within the scope of protection of the present invention.

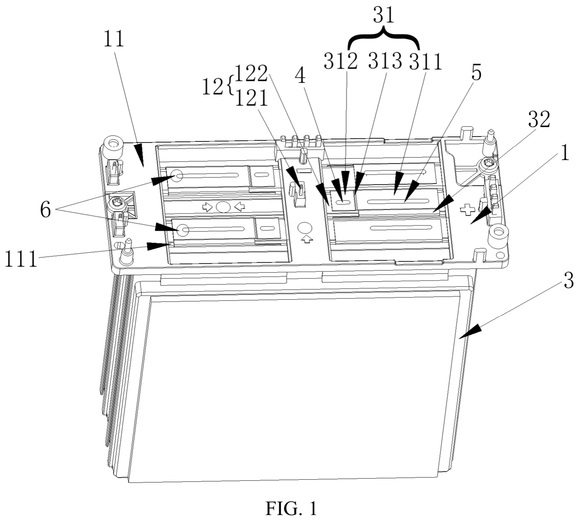

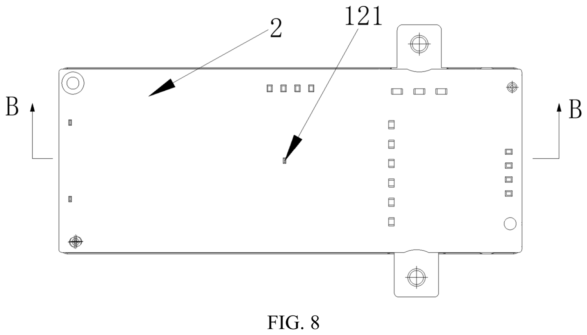

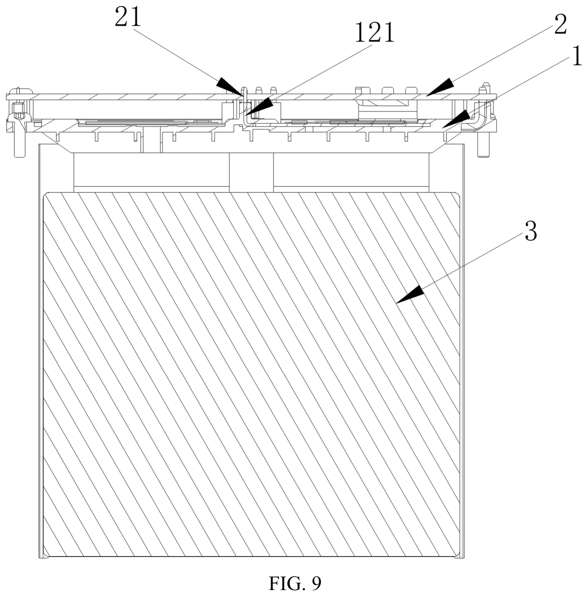

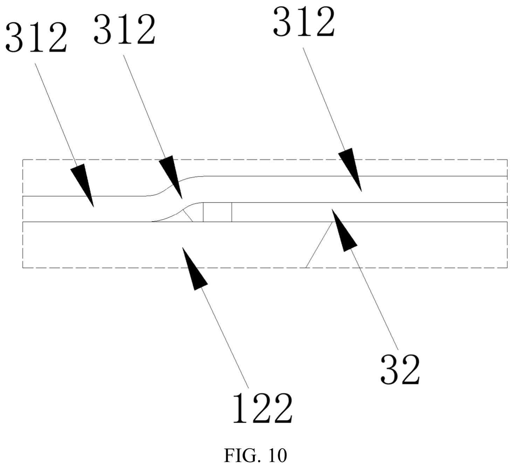

As shown in FIG. 1 to FIG. 10, an embodiment of the present invention provides a battery pack. The battery pack is to be installed onto an electrical device to supply electric power to the electrical device. With reference to FIG. 1, FIG. 3 and FIG. 4, the battery pack mainly includes a housing, and a busbar bracket 1, a BMS board 2 and a plurality of cells 3 which are located within the housing. The housing (not shown in the figures) is configured to provide a receiving space for components such as the busbar bracket 1, the BMS board 2, and the cells 3 of the battery pack. The plurality of cells 3 are all located within the housing. Each of the cells 3 is formed by winding or stacking a positive electrode plate, a negative electrode plate, and a separator disposed between the positive electrode plate and the negative electrode plate. The connection relationship between the plurality of cells 3 is not defined here. For example, it is possible that the plurality of cells 3 are connected in series or in parallel, or that some of the cells 3 are connected in series and some of the cells 3 are connected in parallel. The busbar bracket 1 is disposed between the plurality of cells 3 and the BMS board 2. The busbar bracket 1 is configured to transmit voltage information of the cells 3 to the BMS board 2 to enable detection on the voltage information of the cells 3, ensuring safety of the battery pack in operation. Moreover, the busbar bracket 1 provides welding positions for tabs of the cells 3. The BMS board 2 is a circuit board, which is a core component of the battery pack and is primarily responsible for monitoring, controlling and managing the status of the battery pack to ensure that the battery pack operates safely, stably and efficiently.

Specifically, the busbar bracket 1 includes a plate body 11 and an aluminium busbar 12 connected to the plate body 11. The plate body 11 has a surface provided with a through hole 111, and the tabs of the cells 3 extend through the through hole 111 to a side of the plate body 11 facing away from the cells 3. That is, the tabs pass through the through hole 111 and are bent and connected in an overlapping manner to the busbar bracket 1. The plate body 11 is configured to provide welding and fixing positions for the tabs of the cells 3 and to enable series and/or parallel connection of the plurality of cells 3. The aluminium busbar 12 is located on the side of the plate body 11 facing away from the cells 3. The aluminium busbar 12 includes a first sub-plate 121 and a second sub-plate 122 disposed at an angle. The first sub-plate 121 is configured to be electrically connected to the BMS board 2, the first sub-plate 121 provides support for the connection between adjacent tabs, and the second sub-plate 122 is electrically connected to the tabs. That is, one end of the aluminium busbar 12 is connected to the BMS board 2, the other end of the aluminium busbar 12 is connected to the tabs of the cells 3, and the aluminium busbar 12 is configured to transmit the voltage of the cells 3 to the BMS board 2, to enable the BMS board 2 to acquire the voltage of the cells 3. The plate body 11 and the aluminium busbar 12 are injection-moulded integrally.

In the busbar bracket 1 of the above structure, the aluminium busbar 12 and the plate body 11 are injection-moulded integrally and the aluminium busbar 12 serves as an electrically conductive busbar. In this way, during the process of injection-moulding the aluminium busbar 12 and the plate body 11 into the busbar bracket 1, since aluminium has poorer heat dissipation effect than copper, the aluminium busbar 12 will not be cooled rapidly during cooling of the injection-moulded busbar bracket 1, thereby reducing the probability of forming a gap between the plate body 11 and the aluminium busbar 12 and lowering the risk of fracture of the support. In addition, the aluminium busbar 12 includes the first sub-plate 121 and the second sub-plate 122, the second sub-plate 122 is configured to be connected to the tabs of the cells 3, the first sub-plate 121 is configured to be connected to the BMS board 2, and the first sub-plate 121 and the second sub-plate 122 are disposed at an angle. That is, the aluminium busbar 12 is configured as an integral L-shaped structure, enabling the BMS board 2 to conveniently detect the voltage of the cells 3 via the aluminium busbar 12 while achieving a more compact layout of the busbar bracket 1.

During the process of welding the tabs of the cells 3 connected in series to the aluminium busbar 12, tabs, having opposite polarities, of the adjacent cells 3 are required to be welded together to achieve the series connection of the cells 3, and the connected tabs are required to be welded to the second sub-plate 122, to enable the BMS board 2 to acquire the voltage of the cells 3. That is, two tabs with opposite polarities are required to be welded to the second sub-plate 122. The three are welded simultaneously, which may lead to inadequate welding, i.e., the tabs may fail to be welded to the second sub-plate 122, resulting in the BMS board 2 being unable to acquire the voltage of the cells 3.

In view of this, in some embodiments, referring to FIG. 1, FIG. 2, FIG. 5, FIG. 6 and FIG. 10, at least some cells 3 of the plurality of cells 3 are connected in series, a first tab 31 of one of every two adjacent cells 3 of the cells 3 connected in series and a second tab 32 of the other one of the two adjacent cells are both connected in an overlapping manner to the second sub-plate 122. The first tab 31 has an opposite polarity to the second tab 32. The second tab 32 is located between the first tab 31 and the second sub-plate 122. The first tab 31 has a greater length than the second tab 32 in a length direction of the second sub-plate 122. The first tab 31 includes a first connection portion 311 welded to the second tab 32, a second connection portion 312 welded to the second sub-plate 122, and a bend portion 313 located between the first connection portion 311 and the second connection portion 312. That is, in two cells 3 connected in series, the length of the first tab 31 of one cell 3 is greater than the length of the second tab 32 of the other cell 3; overlap portions of the first tab 31 and the second tab 32 are welded together to achieve the connection of the first tab 31 and the second tab 32; and the portion of the first tab 31 that extends beyond the second tab 32 is welded to the second sub-plate 122, thereby achieving the connection between the tabs and the second sub-plate 122. According to such a configuration, the first connection portion 311 is partially welded to the second tab 32 and the second connection portion 312 is welded to the second sub-plate 122. That is, two tabs are connected by means of one weld bead, and the tabs and the aluminium busbar are connected by means of another weld bead. Compared with a method of welding the two tabs and the second sub-plate 122 by means of one weld bead, the welding method of this technical solution increases the probability of successfully welding the tabs to the second sub-plate 122 and improve the stability of connection between the tabs and the second sub-plate 122. Furthermore, the second connection portion 312 of the first tab 31 is directly welded to the second sub-plate 122 to achieve the connection between the tabs and the aluminium busbar 12. After the second connection portion 312 is welded to the second sub-plate 122, the stability of welding between the second connection portion 312 and the second sub-plate 122 is detected by observing the formation of the weld beads or by lifting a corner of the second connection portion 312 slightly. A portion where inadequate welding occurs is re-welded to ensure that the tabs is welded to the aluminium busbar 12, thereby ensuring the accuracy in acquiring the voltage of the cells 3 by the BMS board 2 and further improving the safety of the battery pack during operation.

In addition, during the processes of welding the first connection portion 311 to the second tab 32 and welding the second connection portion 312 to the second sub-plate 122, the first tab 31 will deform inevitably, which may cause pulling on the middle of the first tab 31. According to the above embodiment in which the bend portion 313 is provided, the bend portion 313 provides a deformation margin for the pulling on the first tab 31 during welding, thereby avoiding damage to the first tab 31 due to the pulling during the welding. Accordingly, the bend portion 313 plays a role in protecting the first tab 31.

In addition, after the tabs and the second sub-plate 122 are welded together by the above welding method, the battery pack will inevitably vibrate and shake during normal use, which may cause a welding position between the second connection portion 312 and the second sub-plate 122 and a welding position between the first connection portion 311 and the second tab 32 to be pulled, and may also result in damage to the portion, between the two welding positions, of the first tab 31 due to the pulling. According to the above embodiment in which the bend portion 313 is provided, the bend portion 313 provides a deformation margin for the pulling on the first tab 31 during shaking of the battery pack, thereby avoiding damage to the first tab 31 due to the pulling and protecting the first tab 31.

It should be noted that the polarities of the first tab 31 and the second tab 32 are not defined herein. By way of example, the first tab 31 may be a positive tab, and the second tab 32 is a negative tab correspondingly. Of course, it is also possible that the first tab 31 is a negative tab, and the second tab 32 is a positive tab correspondingly.

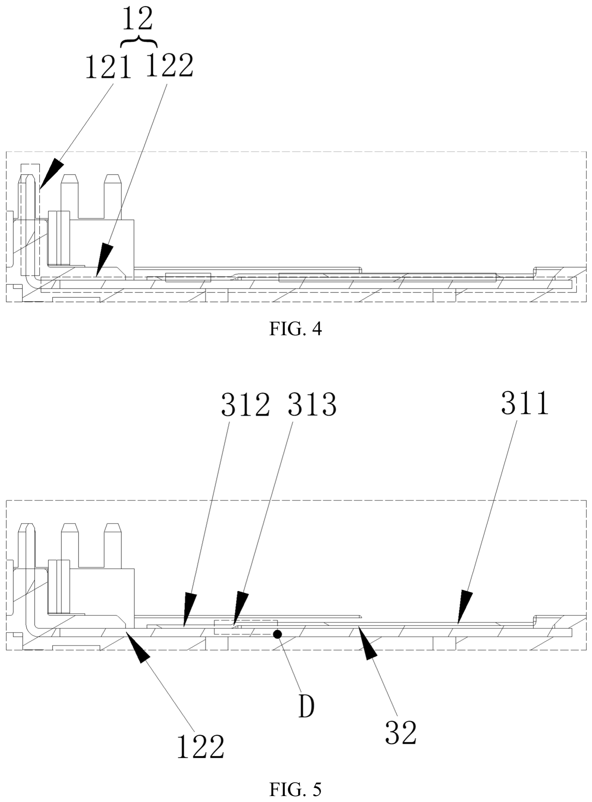

In some embodiments, referring to FIG. 5, the bend portion 313 has a radius of r (not shown in the figure), where 0.2 mm ≤ r ≤ 2 mm. By way of example, the radius r of the bend portion 313 may be 0.2 mm, 0.3 mm, 0.5 mm, 0.6 mm, 0.8 mm, 1 mm, 1.2 mm, 1.5 mm, 1.8 mm, 2 mm, etc. It should be noted that the bend portion 313 is an arc-shaped bend, for example, and the radius of the bend portion 313 is a radius of the arc-shaped bend. When the radius of the bend portion 313 is too small, the bend portion 313 may be unable to provide a deformation margin for the first tab as the first tab 31 is pulled, thereby failing to protect the first tab 31. When the radius of the bend portion 313 is too large, the first tab 31 may be folded at the bend portion 313, affecting the formation of the first tab 31 after the completion of welding, and resulting in material waste of the first tab 31.

Further, the radius of the bend portion 313 satisfies the range of 0.5 mm ≤ r ≤ 1.5 mm. By making the radius of the bend portion 313 satisfy this range, the bend portion 313 provides a deformation margin for the first tab as the first tab 31 is pulled, so as to protect the first tab 31.

In some embodiments, referring to FIG. 5, the bend portion 313 has an angle of α (not shown in the figure), where 10° ≤ α ≤ 40°. By way of example, the angle α of the bend portion 313 may be 10°, 12°, 15°, 20°, 25°, 30°, 35°, 38°, 40°, etc. It should be noted that the angle of the bend portion 313 is the central angle of the bend portion 313 where the bend occurs. When the angle of the bend portion 313 is too small, the bend portion 313 may be unable to provide a deformation margin for the first tab as the first tab 31 is pulled, thereby failing to protect the first tab 31. When the angle of the bend portion 313 is too large, the material of the first tab 31 will be wasted. Further, the angle of the bend portion 313 satisfies the range of 15° ≤ α ≤ 30°. By making the radius of the bend portion 313 satisfy this range, the bend portion 313 provides a deformation margin for the first tab as the first tab 31 is pulled, so as to protect the first tab 31.

In some embodiments, referring to FIG. 5, two ends of the bend portion 313 have a height difference of h (not shown in the figure), where 0.1 mm ≤ h ≤ 0.9 mm. By way of example, the height difference h between the two ends of the bend portion 313 may be 0.1 mm, 0.15 mm, 0.2 mm, 0.3 mm, 0.5 mm, 0.6 mm, 0.8 mm, 0.85 mm, 0.9 mm, etc. It should be note that height difference between the two ends of the bend portion 313 refers to a height difference between the first connection portion 311 and the second connection portion 312. When the height difference of the bend portion 313 is too small, the bend portion 313 may undergo excessive tension, and accordingly the bend portion 313 is unable to provide a deformation margin for the pulling on the first tab 31, thereby failing to protect the first tab 31. When the height difference of the bend portion 313 is too large, the first tab 31 may be folded at the bend portion 313 during the subsequent installation of the battery pack, affecting the formation of the first tab 31 after welding and resulting in material waste of the first tab 31. Further, the height difference between the two ends of the bend portion 313 satisfies the range of 0.3 mm ≤ h ≤ 0.6 mm. By making the radius of the bend portion 313 satisfy this range, the bend portion 313 provides a deformation margin for the first tab as the first tab 31 is pulled, so as to protect the first tab 31.

It should be noted that the above limitations on the radius, the angle, and the height difference of the bend portion 313 apply only to the case where the bend portion 313 undergoes a single bend. When the bend portion 313 undergoes multiple bends, each bend of the bend portion 313 satisfies the above limitations on the bend portion 313.

In some embodiments, referring to FIGS. 1, 2 and 6, a first weld bead 4 is formed between the second connection portion 312 and the second sub-plate 122, and a second weld bead 5 is formed between the first tab 31 and the second tab 32. A distance between the first weld bead 4 and the second weld bead 5 is defined as L1, where 3 mm ≤ L1 ≤ 15 mm. By way of example, the distance L1 between the first weld bead 4 and the second weld bead 5 may be 3 mm, 3.5 mm, 4 mm, 5 mm, 8 mm, 10 mm, 12 mm, 14 mm, 14.5 mm, 15 mm, etc. When the distance between the first weld bead 4 and the second weld bead 5 is too small, the welding process of one of them to interfere with the welding process of the other, thereby affecting the weld formation of either the first weld bead 4 or the second weld bead 5. When the distance between the first weld bead 4 and the second weld bead 5 is too large, the weldable area for at least one of the first weld bead 4 and the second weld bead 5 may be reduced. This may result in a poor connection between the second connection portion 312 and the second sub-plate 122 via the first weld bead 4, and also may cause the second weld bead 5 to become too small, affecting the current carrying capacity of the battery pack, and consequently affecting the performance of the battery pack. Further, the distance L1 between the first weld bead 4 and the second weld bead 5 satisfies the range of 6 mm ≤ L1≤ 8 mm. Such a setting further reduces the interference between the first weld bead 4 and the second weld bead 5, and enhance the stability of connection between the first connection portion 311 and the second sub-plate 122, thereby ensuring the current carrying capacity of the battery pack.

In some embodiments, referring to FIGS. 1, 2 and 6, a distance between the first weld bead 4 and the bend portion 313 is defined as L2, and it is ensured that 1 mm ≤ L2 ≤ 5 mm. By way of example, the distance L2 between the first weld bead 4 and the bend portion 313 may be 1 mm, 1.5 mm, 2 mm, 3 mm, 4 mm, 4.5 mm, 5 mm, etc. For such a setting, when the distance between the first weld bead 4 and the bend portion 313 is too small, the heat generated during the process of welding to form the first weld bead 4 may affect the shape of the bend portion 313, which may result in deformation of the bend portion 313. When the distance between the first weld bead 4 and the bend portion 313 is too large, the first weld bead 4 may be positioned too close to the extremity pf one end of the first tab 31, and the thermal effect generated during welding may affect the structure of the first sub-plate 121 of the aluminium busbar 12. Further, by ensuring that the distance between the first weld bead 4 and the bend portion 313 satisfies the range of 3 mm ≤ L2≤ 4 mm, the position of the first weld bead 4 is further limited, and the thermal effect on other components during the process of welding to form the first weld bead 4 is reduced.

In some embodiments, referring to FIG. 1, FIG. 2 and FIG. 6, a distance between the second weld bead 5 and the bend portion 313 is defined as L3, and it is ensured that 1 mm ≤ L3 ≤ 5 mm. By way of example, the distance L3 between the second weld bead 5 and the bend portion 313 may be 1 mm, 1.5 mm, 2 mm, 3 mm, 4 mm, 4.5 mm, 5 mm, etc. For such a setting, when the distance between the second weld bead 5 and the bend portion 313 is too small, the heat generated during the process of welding to form the second weld bead 5 may affect the shape of the bend portion 313, which may result in deformation of the bend portion 313. When the distance between the second weld bead 5 and the bend portion 313 is too large, the second weld bead 5 may be positioned too close to the extremity of the other end of the first tab 31, which may affect the welding area of the second weld bead 5, further affecting the current carrying area of the battery pack. Further, by ensuring that the distance between the second weld bead 5 and the bend portion 313 satisfies the range of 3 mm ≤ L3≤ 4 mm, the position of the second weld bead 5 is further limited, the thermal effect on other components during the process of welding to form the second weld bead 5 is avoided, and the current carrying capacity of the battery pack is improved.

In some embodiments, referring to FIG. 1, FIG. 2 and FIG. 6, the first tab 31 and the second tab 32 are connected via the second weld bead 5, the area of the second weld bead 5 is defined as S, and the current carrying capacity of the battery pack is defined as I, where S and I satisfies 2 ≤ I/S ≤ 7. By way of example, the ratio of the current carrying capacity of the battery pack to the area of the second weld bead 5 may be 2, 2.5, 3, 4, 4.5, 5, 6, 6.5, 7, etc. When the value of I/S is too small, the welding of the second weld bead 5 is too large, thereby wasting welding resources. When the value of I/S is too large, the area of the second weld bead 5 is too small, and the requirements for the current carrying capacity of the battery pack may not be met, thereby affecting the performance of the battery pack. Further, the ratio of the current carrying capacity to the area of the second weld bead 5 satisfies the range of 4 ≤ I/S ≤ 5, so that the waste of welding resources is further avoided, and the second weld bead 5 meets the current carrying capacity requirements of the battery pack, thereby further improving the performance of the battery pack.

It should be noted that the current carrying capacity of the battery pack refers to the maximum value of current that the battery pack withstands under normal operating conditions. The larger the welding area of the second weld bead 5, the greater the current carrying capacity of the battery pack.

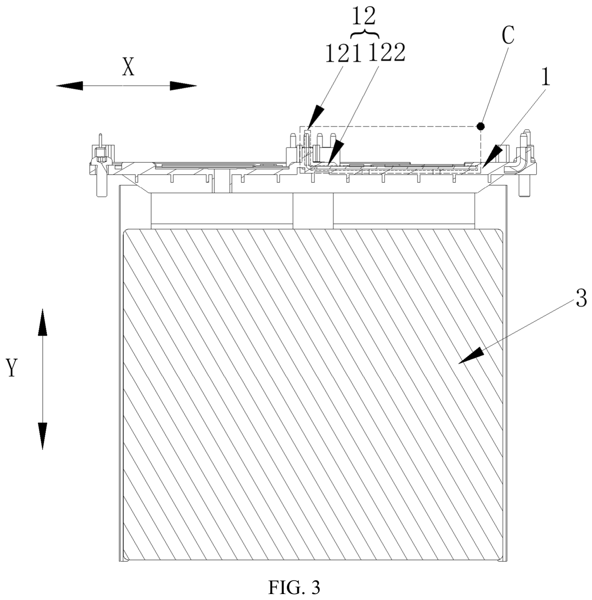

In some embodiments, referring to FIG. 3 to FIG. 6, the first tab 31 is a positive tab and the second tab 32 is a negative tab. Typically, the positive tab is made of aluminium or an aluminium alloy, and the negative tab is made of copper or a copper alloy. Specifically, when the battery pack is oriented upright, the components from top to bottom are the positive tab, the negative tab, and the aluminium busbar 12, that is, the three are arranged in an aluminium-copper-aluminium form. According to such a configuration, a part of an aluminium tab is welded to a copper tab, while a part of the copper tab is welded to the aluminium busbar 12. Since aluminium requires less welding energy than copper, the overall thermal deformation of the tab is reduced, the thermal effect on the plate body 11 is small, and damage to both the tab and the aluminium busbar 12 is reduced. In addition, the thickness of the aluminium is increased correspondingly. This not only improve the performance but also improve the current carrying capacity of the battery pack.

In some embodiments, referring to FIGS. 3 to 6, the thickness of the positive tab is 1.1 to 1.8 times of the thickness of the negative tab. By way of example, the ratio of the thickness of the positive tab to the thickness of the negative tab may be 1.1, 1.15, 1.2, 1.25, 1.3, 1.4, 1.5, 1.6, 1.7, 1.8, etc. Typically, the positive tab is made of aluminium while the negative tab is made of copper. Since copper has a higher current carrying capacity than aluminium, the approach of increasing the thickness of the aluminium tab makes the current carrying capacity of the aluminium tab comparable to the current carrying capacity of the copper tab. However, if the positive tab is made excessively thick, the aluminium tab may already fully meet the current carrying requirements, which may lead to waste of aluminium resources. Further, the thickness of the positive tab is 1.1 to 1.3 times of the thickness of the negative tab. With such a setting, the current carrying capacity of the battery pack is improved further while avoiding the waste of aluminium resources.

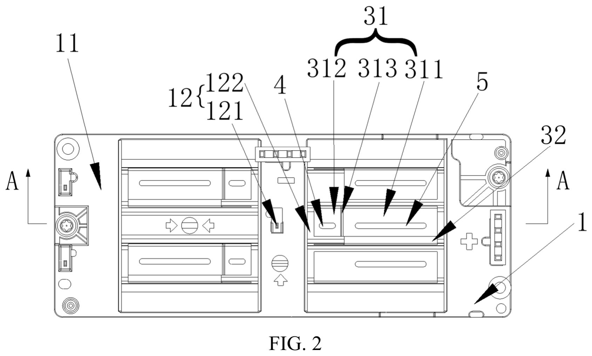

In some embodiments, referring to FIGS. 2 and 3, the second tab 32 has a notch, that is, the length of the second tab 32 is less than the length of the first tab 31; and in a direction perpendicular to a plane where the second sub-plate 122 is located, the second connection portion 312 of the first tab 31 coincides with the notch of the second tab 32, so that the second connection portion 312 is welded to the second sub-plate 122. In addition, a length ratio of the notch to the second tab 32 is 0.2 to 0.45 in the length direction of the second tab 32. By way of example, the length ratio of the notch to the second tab 32 may be 0.2, 0.25, 0.3, 0.35, 0.4, 0.45, etc. When the above ratio is too small, i.e., the notch is too small, the second connection portion 312 may be unable to be welded onto the second sub-plate 122, thereby affecting the stability of welding of the tabs and the aluminium busbar 12. When the above ratio is too large, i.e., the notch is too large, the welding size of the first connection portion 311 and the second tab 32 will be reduced, resulting in that the second weld bead 5 is unable to meet the current carrying requirements of the battery pack, thereby affecting the performance of the battery pack. Further, the length ratio of the notch to the second tab 32 is 0.3 to 0.4. Such a setting facilitates the welding of the second connection portion 312 and the second sub-plate 122 and ensures the welding area of the first tab 31 and the second tab 32, thereby ensuring the current carrying capacity of the battery pack.

It should be noted that the length direction of the second tab 32 is a direction indicated by a double-headed arrow X in FIG. 3; and the direction perpendicular to the plane where the second sub-plate 122 is located is a direction indicated by a double-headed arrow Y in FIG. 3.

In some embodiments, referring to FIG. 1, the battery pack includes a heat-conducting block 6 disposed between a thermistor of the BMS board 2 and the tab. The heat-conducting block 6 is disposed on the first connection portion 311. Specifically, in the direction perpendicular to the plane where the second sub-plate 122 is located, the first tab 31, the second tab 32 and the aluminium busbar 12 are sequentially arranged at the position of the first connection portion 311, and accordingly this position has highest temperature. By means of the heat-conducting block 6 disposed at this position, the highest-temperature position of the battery pack is detected. When the temperature at this position does not exceed the normal operating temperature of the battery back, it is ensured that the battery pack operates normally.

In some embodiments, referring to FIG. 1, at least two heat-conducting blocks 6 are provided, every two adjacent cells 3 of the cells 3 connected in series form a cell group, each of the cell groups is provided with one of the heat-conducting blocks 6, and no heat-conducting block 6 is provided between adjacent cell groups. Specifically, it is seen from the above embodiments that the heat-conducting block 6 is disposed on the first connection portion 311, and the heat-conducting block 6 detects the temperature of two adjacent cells 3. That is, the heat-conducting block 6 detects the temperature of one cell group of the cells 3 connected in series. It is ensured here that one heat-conducting block 6 is provided in each cell group and that no heat-conducting block 6 is provided between the adjacent cell groups. By way of example, there are four cells 3 connected in series, one heat-conducting block 6 is provided at the connection position of tabs between a first cell and a second cell, and another heat-conducting block 6 is provided at the connection position of tabs between a third cell and a fourth cell, so that only two heat-conducting blocks 6 are provided to enable detection of the temperatures of the four cells 3. This configuration enables detection of the temperatures of the cells 3 while reducing the number of heat-conducting blocks 6 required, so that the number of heat-conducting blocks 6 and the number of thermistors of the battery pack are reduced while meeting the basic function of detecting the temperature of the battery pack, thereby reducing the manufacturing cost of the battery pack.

Of course, it is also possible that a heat-conducting block 6 is provided between any adjacent cells 3 of the plurality of cells 3 connected in series.

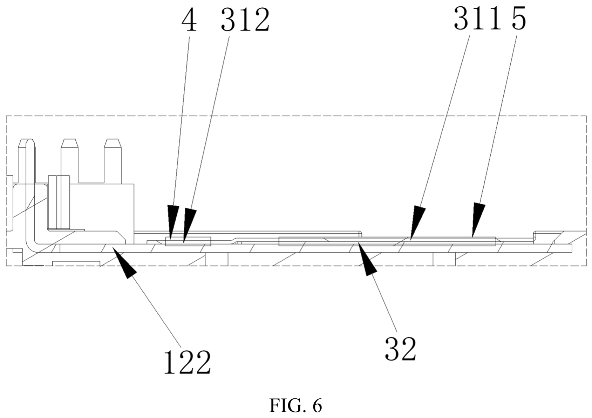

In some embodiments, referring to FIG. 6, the first sub-plate 121 has a thickness of m, where 0.5 mm ≤ m ≤ 3 mm.

Specifically, by ensuring here that the thickness of the first sub-plate 121 satisfies the above range, the first sub-plate 121 meets the electrical conductivity requirements, thereby avoiding the instability of connection with the BMS board 2 due to the insufficient thickness, and thus avoiding material waste caused by excessive thickness.

By way of example, the thickness of the first sub-plate 121 may be 0.5 mm, 0.6 mm, 0.8 mm, 1 mm, 1.5 mm, 2 mm, 2.5 mm, 2.8 mm, 3 mm, etc.

The second sub-plate 122 has a width of n, where 5 mm ≤ n ≤ 15 mm.

By ensuring here that the width of the second sub-plate 122 satisfies the above range, the stability of support and connection of the second sub-plate 122 to the tabs is improved, avoiding the failure in supporting the tabs due to the insufficient width of the second sub-plate 122, and avoiding material waste caused by excessive width of the second sub-plate 122.

By way of example, the width of the second sub-plate 122 may be 5 mm, 5.5 mm, 6 mm, 8 mm, 10 mm, 12 mm, 14 mm, 14.5 mm, 15 mm, etc.

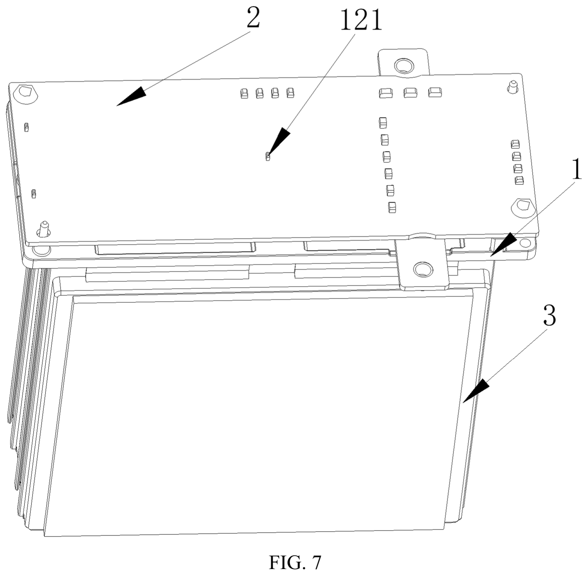

In some embodiments, referring to FIGS. 7 to 9, the BMS board 2 is provided with a mounting hole 21, a copper plating layer is disposed on an inner wall surface of the mounting hole 21, and the first sub-plate 121 extends into the mounting hole 21 and is electrically connected to the copper plating layer. Specifically, since the first sub-plate 121 extends into the mounting hole 21 and is connected to the BMS board 2 by welding, the connection area of the first sub-plate 121 and the BMS board 2 is small. Since the copper plating layer is disposed on the inner wall surface of the mounting hole 21 and the copper has good electrical conductivity and heat dissipation performance, rapid heat dissipation is achieved during welding, and the electrical conductivity of the connection between the first sub-plate 121 and the BMS board is improved.

The basic principles of the present invention have been described above with reference to the specific embodiments, but it should be noted that the advantages, superiorities, effects and the like mentioned in the present invention are merely examples rather than limitations, and these advantages, superiorities, effects and the like cannot be considered to be necessary for all the embodiments of the present invention. In addition, the specific details disclosed above are only for the purposes of illustration and easy understanding but not limitation, and the above details do not restrict the present invention from being implemented by using the above specific details.

The block diagrams of devices, apparatuses, equipment and systems involved in the present invention are only illustrative examples and are not intended to require or imply that they must be connected, arranged and configured in the manners shown in the block diagrams. As will be appreciated by those skilled in the art, these devices, apparatuses, equipment and systems are connected, arranged and configured in any way. Words such as "including", "comprising", "having", etc. are open-ended words that mean "including but not limited to" and are used interchangeably therewith. The words "or" and "and" as used herein refer to the words "and/or" and are used interchangeably therewith unless the context clearly indicates otherwise. The word "such as" as used here refers to the phrase "such as, but not limited to" and is used interchangeably therewith.

It should also be noted that in the apparatus, device and method of the present invention, each component or each step can be decomposed and/or recombined. These decompositions and/or recombinations should be regarded as equivalent solutions of the present invention.

The above description of the disclosed aspects is provided to enable any person skilled in the art to make or use the present invention. Various modifications to these aspects will be readily apparent to those skilled in the art, and the general principles defined herein may be applied to other aspects without departing from the scope of the present invention. Therefore, the present invention is not intended to be limited to the aspects shown herein, but to be in the broadest scope consistent with the principles and novel features disclosed herein.

It should be understood that the qualifiers "first", "second", "third", "fourth", "fifth" and "sixth" used in the description of the embodiments of the present invention are only used to explain the technical solutions more clearly and are not intended to limit the scope of protection of the present invention.

The above description has been given for purposes of illustration and description. Moreover, this description is not intended to limit the embodiments of the present invention to the form disclosed herein. While various example aspects and embodiments have been discussed above, those skilled in the art will recognize certain variations, modifications, alterations, additions and sub-combinations thereof.

## Claims

1. A battery pack, comprising a housing, and a busbar bracket (1), a battery management system (BMS) board (2) and a plurality of cells (3) which are located within the housing, wherein the busbar bracket (1) is disposed between the plurality of the cells (3) and the BMS board (2), and the busbar bracket (1) comprises:
a plate body (11) having a surface provided with a through hole (111), tabs of the cells (3) extending through the through hole (111) to a side of the plate body (11) facing away from the cells (3); and
an aluminium busbar (12) located on the side of the plate body (11) facing away from the cells (3), the aluminium busbar (12) comprising a first sub-plate (121) and a second sub-plate (122) disposed at an angle, the first sub-plate (121) being electrically connected to the BMS board (2), and the second sub-plate (122) being electrically connected to the tabs,
wherein the plate body (11) and the aluminium busbar (12) are injection-moulded integrally.

2. The battery pack according to claim 1, wherein at least some of the plurality of cells (3) are connected in series, a first tab (31) of one of every two adjacent cells (3) of the cells (3) connected in series and a second tab (32) of the other one of the two adjacent cells (3) of the cells (3) connected in series are connected to the second sub-plate (122) in an overlapping manner, and the first tab (31) has an opposite polarity to the second tab (32), wherein
the second tab (32) is located between the first tab (31) and the second sub-plate (122), the first tab (31) has a greater length than the second tab (32) in a length direction of the second sub-plate (122), and the first tab (31) comprises a first connection portion (311) welded to the second tab (32), a second connection portion (322) welded to the second sub-plate (122), and a bend portion (313) located between the first connection portion (311) and the second connection portion (322).

3. The battery pack according to claim 2, wherein
the bend portion (313) has a radius of r, where 0.2 mm ≤ r ≤ 2 mm.

4. The battery pack according to claim 2 or claim 3, wherein the bend portion (313) has an angle of α, where 10° ≤ α ≤ 40.

5. The battery pack according to any one of claims 2 to 4, wherein two ends of the bend portion (313) have a height difference of h, where 0.1 mm ≤ h ≤ 0.9 mm.

6. The battery pack according to any one of claims 2 to 5, wherein a first weld bead (4) is formed between the second connection portion (322) and the second sub-plate (122), and a second weld bead (5) is formed between the first tab (31) and the second tab (32); and
a distance between the first weld bead (4) and the second weld bead (5) is defined as L1, where 3 mm ≤ L1 ≤ 15 mm.

7. The battery pack according to claim 6, wherein a distance between the first weld bead (4) and the bend portion (313) is defined as L2, where 1 mm ≤ L2 ≤ 5 mm; and/or
a distance between the second weld bead (5) and the bend portion (313) is defined as L3, where 1 mm ≤ L3 ≤ 5 mm.

8. The battery pack according to any one of claims 2 to 7, wherein the first tab (31) and the second tab (32) are connected via the second weld bead (5), an area of the second weld bead (5) is defined as S, and a current carrying capacity of the battery pack is defined as I, where S and I satisfies 2 ≤ I/S ≤ 7.

9. The battery pack according to any one of claims 2 to 8, wherein the first tab (31) is a positive tab and the second tab (32) is a negative tab.

10. The battery pack according to claim 6, wherein a thickness of the positive tab is 1.1 to 1.8 times of a thickness of the negative tab.

11. The battery pack according to any one of claims 2 to 10, wherein the second tab (32) has a notch, and a length ratio of the notch to the second tab (32) is 0.2 to 0.45 in a length direction of the second tab (32).

12. The battery pack according to any one of claims 2 to 11, further comprising a heat-conducting block (6) disposed between a thermistor of the BMS board (2) and the tab, the heat-conducting block (6) being disposed on the first connection portion (311).

13. The battery pack according to claim 12, wherein at least two the heat-conducting blocks (12) are provided, every two adjacent cells (3) of the cells (3) connected in series form a cell group, each of the cell groups is provided with one of the heat-conducting blocks (6), and no heat-conducting block (6) is provided between adjacent cell groups.

14. The battery pack according to any one of claims 1 to 13, wherein the first sub-plate (121) has a thickness of m, where 0.5 mm ≤ m ≤ 3 mm; and/or
the second sub-plate (122) has a width of n, where 5 mm ≤ n ≤ 15 mm.

15. The battery pack according to any one of claims 1 to 14, wherein the BMS board (2) is provided with a mounting hole (21), a copper plating layer is disposed on an inner wall surface of the mounting hole (21), and the first sub-plate (121) extends into the mounting hole (21)and is electrically connected to the copper plating layer.
